# EUROPEAN PATENT APPLICATION

(11) **EP 2 293 020 A1**
(43) Date of publication of application: **09.03.2011**
(21) Application number: 10170474.0
(22) Date of filing: 22.07.2010
(51) Int. Cl.: G01C 23/00, G01W 1/00, B64F 5/00

(54) **Display and method for selecting images to be displayed**

(30) Priority: 31.07.2009 US 533791
(71) Applicant: Honeywell International Inc., Morristown, NJ 07962 (US)
(72) Inventor: Woltkamp, John, Morristown, NJ 07962-2245 (US)
(74) Representative: Buckley, Guy Julian

(57) **Abstract**

A method is disclosed for selecting images to be presented on a display (116, 200) to an aircraft crew member, wherein the display (116, 200) includes a first area for displaying a first primary image (202), a second area for displaying a second primary image (204), and a third area for displaying a plurality of secondary images (240), comprising rendering (802, 902) on the display (116, 200) the first and second primary images (202, 204) and the plurality of secondary images (240), the first and second primary images (202, 204) including a first (211, 212, 213, 214) and a second (221, 222, 223) plurality of smaller images, respectively; selecting (804, 904) one of the smaller images (211, 212, 213, 214, 221, 222, 223); selecting (806, 906) one of the secondary images (231, 232, 233, 234, 235, 236, 237); and rendering (808, 908) the selected secondary image as the selected smaller image on the display.

## Description

### FIELD OF THE INVENTION

The present invention generally relates to displaying of images and more particularly to a display and method for selecting images to be displayed.

### BACKGROUND OF THE INVENTION

World wide air traffic is projected to double every ten to fourteen years and the International Civil Aviation Organization (ICAO) forecasts world air travel growth of five percent per annum until the year 2020. Such growth may cause degradation in safety and performance and an increase in an already high workload of the flight crew. One negative influence on flight performance has been the ability for the aircrew to select a viewable image or images on one or more displays. The ability to easily and quickly select a desired image for presentation on the display can significantly improve situational awareness of the flight crew resulting in increased flight safety and performance by reducing the flight crew workload.

These electronic instrumentation displays continue to advance in sophistication, achieving increasingly higher levels of information density and, consequently, presenting a greater amount of visual information to be perceived and understood by the operator, e.g., pilot. The number of possible screen images that may be selected have also increased. The operator may have many image options available, including, for example, aviation maps such as desired flight path and terrain maps, and aircraft system maps such as hydraulic, electrical, and fuel. It is important that a proper cognitive mapping be provided between what the operator needs to see on a display and the information available to accomplish the task. These mapping systems typically have been a textual menu in outline form listing possible images for selection by using buttons, knobs, a mouse, or keyboard to cursor through and select the desired image to be displayed. These known systems require the aircrew's attention over an inordinate amount of time, thereby distracting them from performing other flight duties.

Accordingly, it is desirable to provide an apparatus and method for presenting and easily selecting an image to be presented on a display. Furthermore, other desirable features and characteristics of the present invention will become apparent from the subsequent detailed description of the invention and the appended claims, taken in conjunction with the accompanying drawings and this background of the invention.

### BRIEF SUMMARY OF THE INVENTION

A method for selecting an image to be displayed includes rendering on a display a plurality of primary images and a plurality of secondary images, selecting one of the primary images, selecting one of the secondary images, and replacing the selected one of the primary images by the selected one of the secondary images on the display.

### BRIEF DESCRIPTION OF THE DRAWINGS

The present invention will hereinafter be described in conjunction with the following drawing figures, wherein like numerals denote like elements, and

FIG. 1 is is a block diagram of a known aircraft system for presenting images on a display;

FIG. 2 is a first pictorial front view of a display in accordance with an exemplary embodiment;

FIG. 3 is a second pictorial front view of a display in accordance with an exemplary embodiment;

FIG. 4 is a third pictorial front view of a display in accordance with an exemplary embodiment;

FIG. 5 is a fourth pictorial front view of a display in accordance with an exemplary embodiment; and

FIG. 6 is a fifth pictorial front view of a display in accordance with an exemplary embodiment; and

FIGS. 7 and 8 are flow charts of the steps in accordance with exemplary embodiments.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed description of the invention.

A method and apparatus is disclosed for selecting one of a plurality of secondary (smaller) images for presentation as a primary (larger) image to an aircrew member of an aircraft. The secondary images, and therefore the primary image, may include aircraft systems, for example, hydraulic, electrical, or fuel systems, and views outside the aircraft, for example, terrain, weather, or navigational aids. The primary image and secondary images may be rendered on the same display or separate displays. The selection is preferably accomplished by use of a touch or selecting screen, but may be by use of a keyboard, mouse, or other known methods.

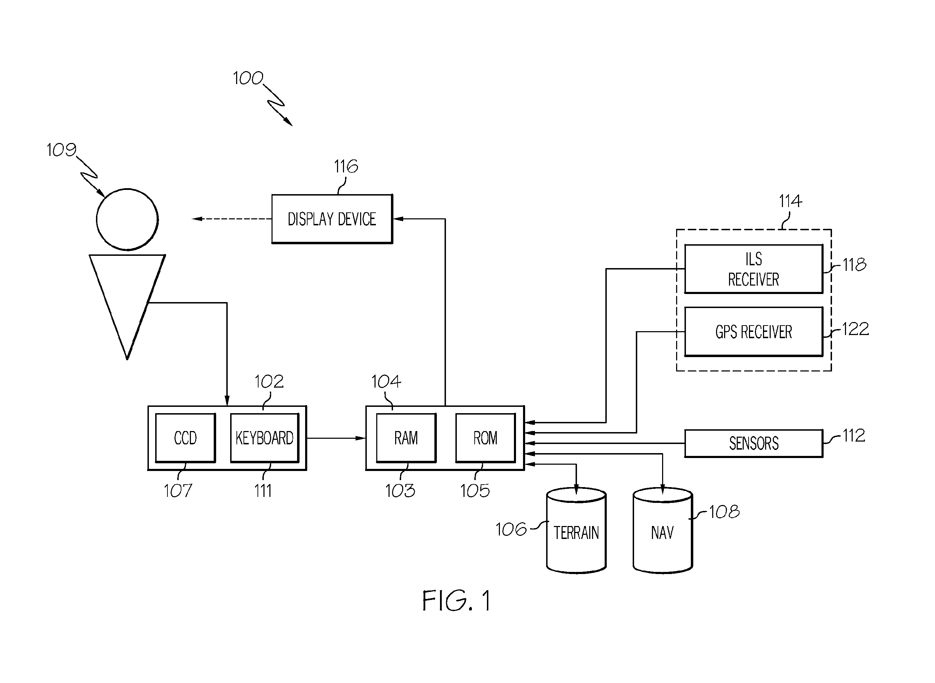

Referring to FIG. 1, a flight deck display system 100 includes a user interface 102, a processor 104, one or more terrain databases 106 sometimes referred to as a Terrain Avoidance and Warning System (TAWS), one or more navigation databases 108, various sensors 112, various external data sources 114, and one or more display devices 116. The user interface 102 is in operable communication with the processor 104 and is configured to receive input from a user 109 (e.g., a pilot) and, in response to the user input, supply command signals to the processor 104. The user interface 102 may be any one, or combination, of various known user interface devices including, but not limited to, a cursor control device (CCD) 107, such as a mouse, a trackball, or joystick, and/or a keyboard, one or more buttons, switches, or knobs. In the depicted embodiment, the user interface 102 includes a CCD 107 and a keyboard 111. The user 109 uses the CCD 107 to, among other things, move a cursor symbol on a display screen, and may use the keyboard 111 to, among other things, input textual data.

The processor 104 may be any one of numerous known general-purpose microprocessors or an application specific processor that operates in response to program instructions. In the depicted embodiment, the processor 104 includes on-board RAM (random access memory) 103, and on-board ROM (read only memory) 105. The program instructions that control the processor 104 may be stored in either or both the RAM 103 and the ROM 105. For example, the operating system software may be stored in the ROM 105, whereas various operating mode software routines and various operational parameters may be stored in the RAM 103. The software executing the exemplary embodiment is stored in either the ROM 105 or the RAM 103. It will be appreciated that this is merely exemplary of one scheme for storing operating system software and software routines, and that various other storage schemes may be implemented. It will also be appreciated that the processor 104 may be implemented using various other circuits, not just a programmable processor. For example, digital logic circuits and analog signal processing circuits could also be used.

No matter how the processor 104 is specifically implemented, it is in operable communication with the terrain databases 106, the navigation databases 108, and the display devices 116, and is coupled to receive various types of inertial data from the various sensors 112, and various other avionics-related data from the external data sources 114. The processor 104 is configured, in response to the inertial data and the avionics-related data, to selectively retrieve terrain data from one or more of the terrain databases 106 and navigation data from one or more of the navigation databases 108, and to supply appropriate display commands to the display devices 116. The display devices 116, in response to the display commands, selectively render various types of textual, graphic, and/or iconic information. The preferred manner in which the textual, graphic, and/or iconic information are rendered by the display devices 116 will be described in more detail further below. Before doing so, however, a brief description of the databases 106, 108, the sensors 112, and the external data sources 114, at least in the depicted embodiment, will be provided.

The terrain databases 106 include various types of data representative of the terrain over which the aircraft is flying, and the navigation databases 108 include various types of navigation-related data. These navigation-related data include various flight plan related data such as, for example, waypoints, distances between waypoints, headings between waypoints, data related to different airports, navigational aids, obstructions, special use airspace, political boundaries, communication frequencies, and aircraft approach information. It will be appreciated that, although the terrain databases 106, and the navigation databases 108 are, for clarity and convenience, shown as being stored separate from the processor 104, all or portions of either or both of these databases 106, 108 could be loaded into the RAM 103, or integrally formed as part of the processor 104, and/or RAM 103, and/or ROM 105. The databases 106, 108 could also be part of a device or system that is physically separate from the system 100.

The sensors 112 may be implemented using various types of inertial sensors, systems, and or subsystems, now known or developed in the future, for supplying various types of inertial data. The inertial data may also vary, but preferably include data representative of the state of the aircraft such as, for example, aircraft speed, heading, altitude, and attitude. The number and type of external data sources 114 may also vary. For example, the external systems (or subsystems) may include, for example, a flight director and a navigation computer, just to name a couple. However, for ease of description and illustration, only an instrument landing system (ILS) receiver 118 and a global position system (GPS) receiver 122 are depicted in FIG. 1.

As is generally known, the ILS is a radio navigation system that provides aircraft with horizontal (or localizer) and vertical (or glide slope) guidance just before and during landing and, at certain fixed points, indicates the distance to the reference point of landing on a particular runway. The system includes ground-based transmitters (not illustrated) that transmit radio frequency signals. The ILS receiver 118 receives these signals and, using known techniques, determines the glide slope deviation of the aircraft. As is generally known, the glide slope deviation represents the difference between the desired aircraft glide slope for the particular runway and the actual aircraft glide slope. The ILS receiver 118 in turn supplies data representative of the determined glide slope deviation to the processor 104.

The GPS receiver 122 is a multi-channel receiver, with each channel tuned to receive one or more of the GPS broadcast signals transmitted by the constellation of GPS satellites (not illustrated) orbiting the earth. Each GPS satellite encircles the earth two times each day, and the orbits are arranged so that at least four satellites are always within line of sight from almost anywhere on the earth. The GPS receiver 122, upon receipt of the GPS broadcast signals from at least three, and preferably four, or more of the GPS satellites, determines the distance between the GPS receiver 122 and the GPS satellites and the position of the GPS satellites. Based on these determinations, the GPS receiver 122, using a technique known as trilateration, determines, for example, aircraft position, groundspeed, and ground track angle. These data may be supplied to the processor 104, which may determine aircraft glide slope deviation therefrom. Preferably, however, the GPS receiver 122 is configured to determine, and supply data representative of, aircraft glide slope deviation to the processor 104.

The display devices 116, as noted above, in response to display commands supplied from the processor 104, selectively renders various textual, graphic, and/or iconic information, and thereby supplies visual feedback to the user 109. It will be appreciated that the display device 116 may be implemented using any one of numerous known display devices suitable for rendering textual, graphic, and/or iconic information in a format viewable by the user 109. Non-limiting examples of such display devices include various cathode ray tube (CRT) displays, and various flat panel displays such as various types of LCD (liquid crystal display) and TFT (thin film transistor) displays. The display devices 116 may additionally be implemented as a panel mounted display, a HUD (head-up display) projection, or any one of numerous known technologies. It is additionally noted that the display devices 116 may be configured as any one of numerous types of aircraft flight deck displays. For example, it may be configured as a multi-function display, a horizontal situation indicator, or a vertical situation indicator, just to name a few. In the depicted embodiment, however, one of the display devices 116 is configured as a primary flight display (PFD).

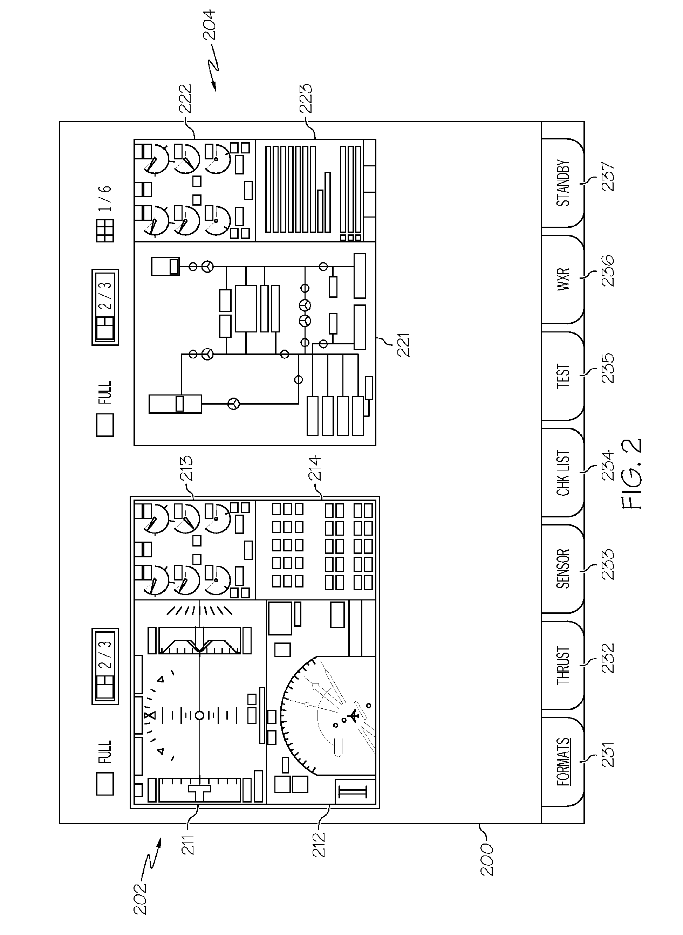

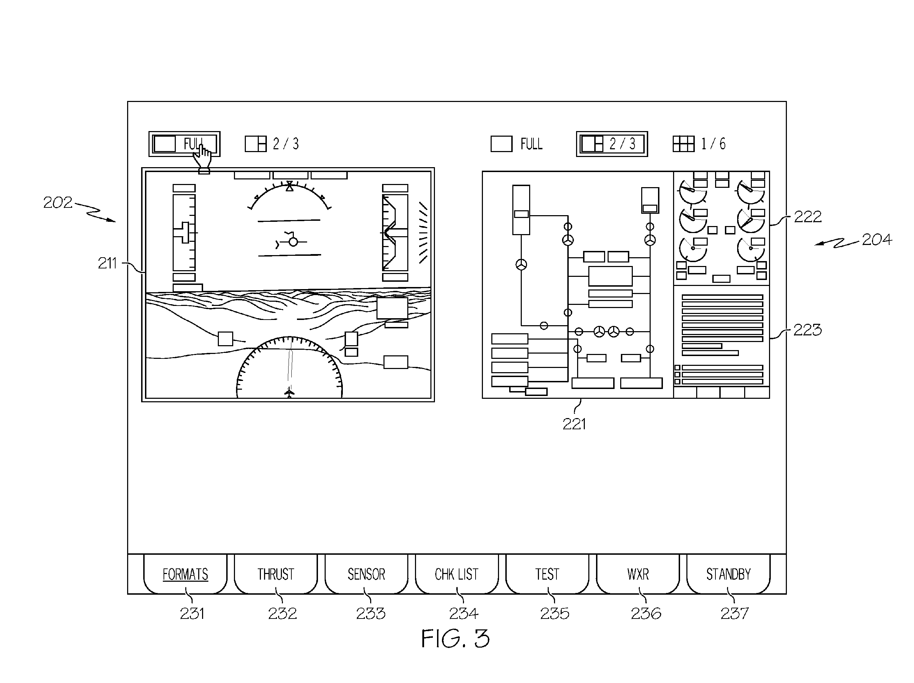

Referring to FIG. 2, a display device 200, which is one of the display devices 116, includes, in accordance with an exemplary embodiment, a primary display of exemplary textual, graphical, and/or iconic information rendered in response to appropriate display commands from the processor 104. Such textual, graphical, and/or iconic information may be referred herein as an image. While the display device 200 renders primary images 202 and 204 in this particular exemplary embodiment, it should be understood that the primary images may number one or more. Primary image 202 includes five smaller images 211, 212, 213, 214 in a 2/3^{rd} sized display format and primary image 204 includes three smaller images 221, 222, 223 in a 1/3^{rd} sized format. However, the primary images 202 and 204 may comprise any number of images including one. For example, by selecting one of the smaller images 211 in primary image 202 and then selecting the "FULL" icon above primary image 202, the selected smaller image 211 will occupy the entire primary image 202 as shown in FIG. 3.

The smaller images 211, 212, 213, 214, 215, 221, 222, 223, 224 may be any image selected from those available to the aircrew, for example, aircraft systems, flight data, navigation aids, and visual aids. Referring to FIG. 1 for this exemplary embodiment, image 211 is a visual of the terrain ahead of the aircraft, and may be a three-dimensional perspective view. Image 212 is a top view of a compass showing aircraft heading, desired course, and the like. Image 213 illustrates several gages providing aircraft system performance and image 214 is electrical system data. Image 221 is an image of the hydraulic system including, for example, pressurized storage tanks, aircraft systems using the hydraulic fluid, and conduits for applying the pressurized hydraulic fluid to the aircraft systems. Image 222 is of gages showing aircraft system performance, and image 223 is an operational checklist. However, these are only one of several images that are selectable in accordance with the exemplary embodiment.

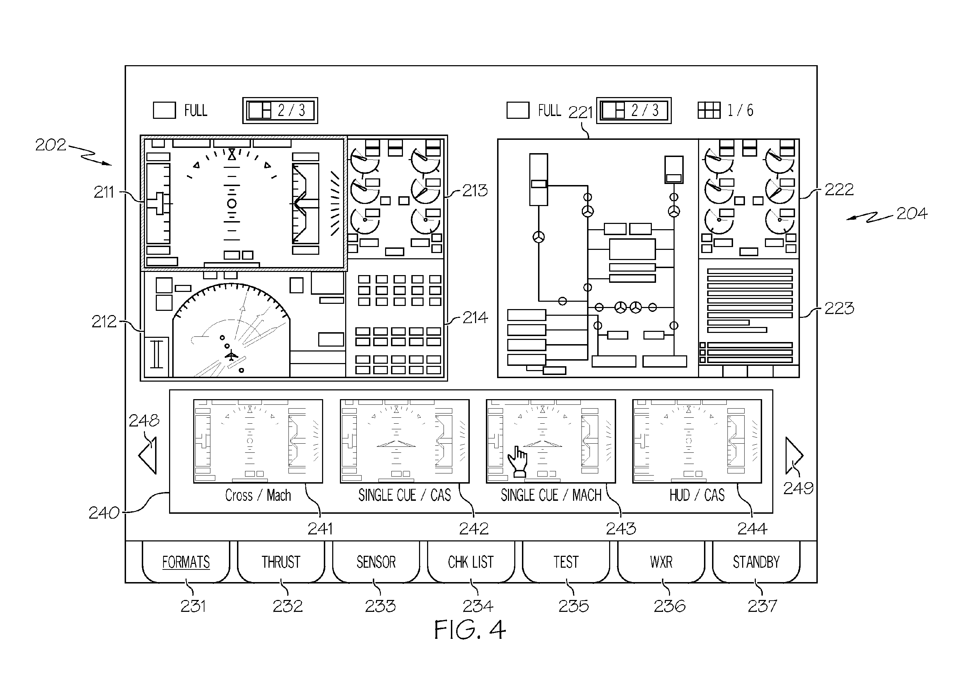

The display device 200 further displays secondary images 240 include at least images 241, 242, 243, 244, each rendering an image of an aircraft visual, system, flight data or the like. For example, images 241, 242, 243, 244 may be, respectively and as shown in the picture of FIG. 4, a Cross/Mach icon 241, a SingleCue/CAS icon 242, a SingleCue/Mach icon 243, and a HUD/CAS icon 244. Examples of other images may include, for example, navigational charts, aircraft attitude, and weather. And while the display 240 illustrates four images 241, 242, 243, 244, it should be understood that in other exemplary embodiments, it may include two or more images.

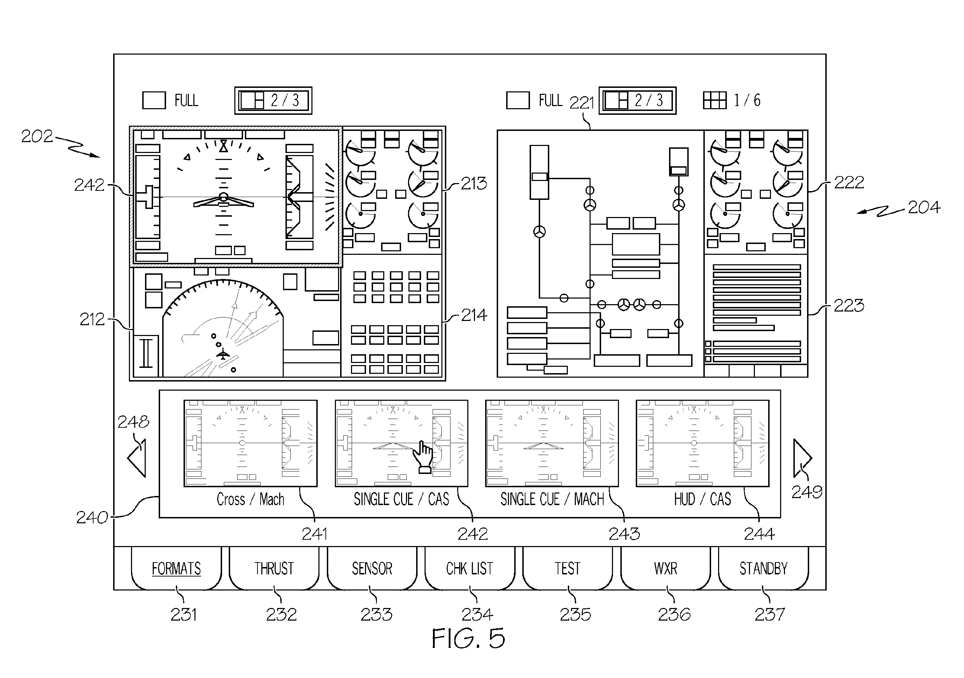

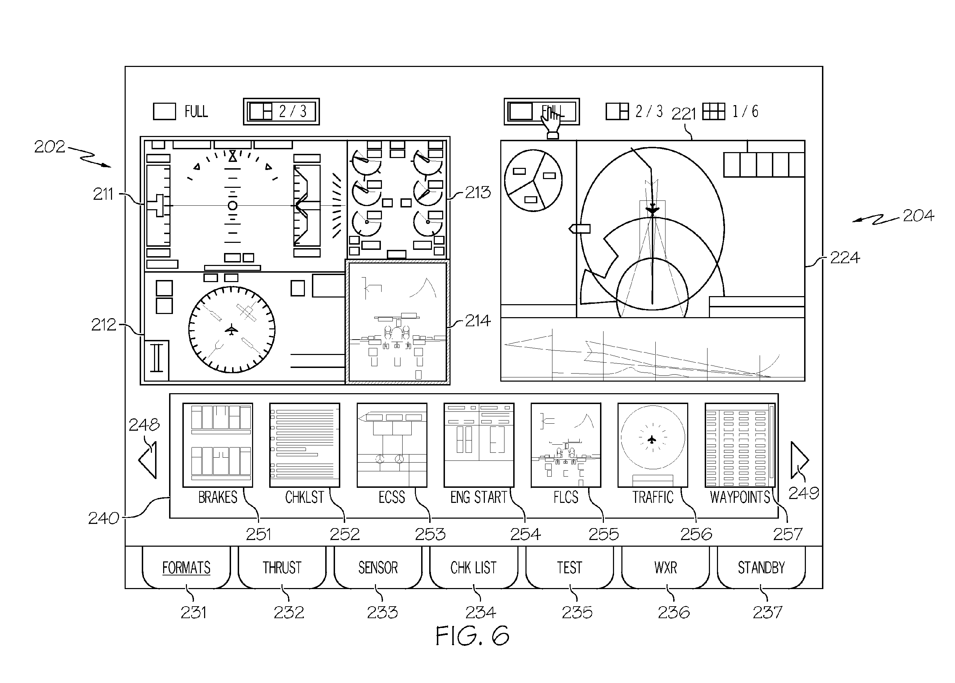

When an aircrew member wishes to view one of the secondary images 241, 242, 243, 244 on one of the larger primary images 202 or 204, the aircrew member would touch or select one of the smaller images 211, 212, 213, 214, 215, 221, 222, 223, 224 and then touch or select the secondary image 241, 242, 243, 244 desired. The secondary image 241, 242, 243, 244 selected would appear as the selected smaller image. For example, the aircrew member may touch or select the image 211 and then touch or select the image 242. The image of the SingleCue/CAS would then appear as the primary image 211 as shown in FIG. 5. When the number of secondary images 241, 242, 243, 244 is so numerous that they all cannot be displayed across the screen of the display device 200, left curser 248 and right curser 249 are provided so more of the secondary images may be viewed. For example, when touching or selecting the right curser 249, the images would shift to the right, with a previously not displayed image appearing as the left most image with each touch or selection of the right curser. In another embodiment, a curser may be placed on one of the secondary images 241, 242, 243, 244 selected, and "dragged" to either the left or right, thereby presenting secondary images not previously displayed. FIG. 6 illustrates other exemplary and selectable secondary icons 240 including Brakes 251 (including hydraulic system status), Chklst 252 (operational steps), EcsS 253 (including Environmental system status), EngStart 254 (including APU status), FlcS 255 (including Flight control system status), Traffic 256 (obstructions to flight), and Waypoint 257 (navigational data) icons.

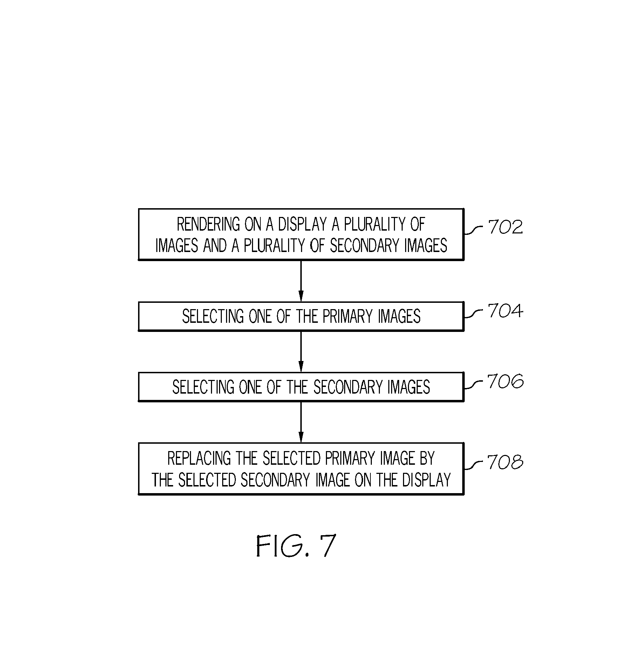

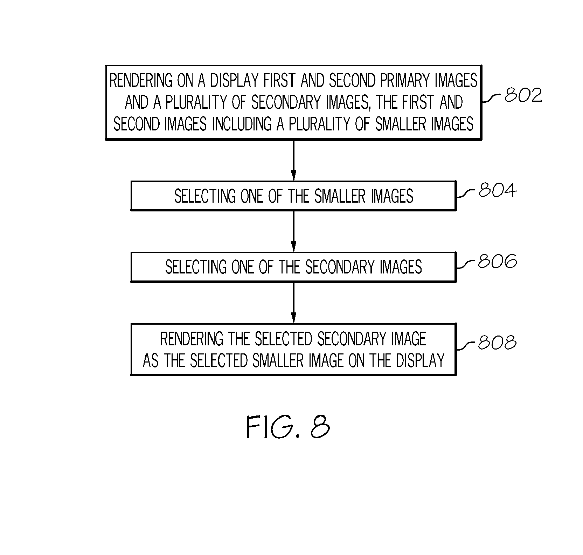

FIG. 7 is a flow chart of the steps of the exemplary embodiment including rendering on a display a plurality of primary images and a plurality of secondary images, selecting one of the primary images, selecting one of the secondary images and replacing the selected one of the primary images by the selected one of the secondary images on the display. FIG. 8 is a flow chart of the steps of another exemplary embodiment including selecting images to be presented on a display to an aircraft crew member, wherein the display includes a first area for displaying a first primary image, a second area for displaying a secondary primary image, and a third area for displaying a plurality of secondary images, comprising rendering on the display the first and second primary images and a plurality of secondary images, the first and second primary images including a first and a second plurality of smaller images, respectively, selecting one of the smaller images, selecting one of the secondary images, and rendering the selected secondary image as the selected smaller image on the display.

In the exemplary embodiments described above, the primary image is generally in the range of 8 centimeters diagonally and the secondary images are each generally in the range of 2.5 centimeters diagonally; however, the images may be of any size. While the selection of the secondary image to be rendered as the primary image preferably is accomplished by rendering the images on a touch or selecting screen, the selection may be accomplished by other methods such as by the use of a keyboard or mouse.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A method for selecting an image to be displayed, comprising:
rendering on a display a plurality of primary images and a plurality of secondary images;
selecting one of the primary images;
selecting one of the secondary images; and
replacing the selected one of the primary images by the selected one of the secondary images on the display.

2. The method of claim 1 further comprising:
selecting one of the smaller images and an icon to render the selected smaller image in place of the smaller images.

3. The method of claim 1 further comprising selecting the primary image and an icon to render the primary image to occupy a majority of the display.

4. The method of claim 1 further comprising cursoring through the secondary icons.

5. The method of claim 1 wherein the smaller images comprise the aircraft's hydraulic system, AC electrical system, DC electrical system, and fuel system.

6. The method of claim 1 wherein the display is a touch screen and the selecting steps comprise touching the touch screen.

7. The method of claim 4 wherein the cursoring step comprises selecting a cursoring icon.
